# EUROPÄISCHE PATENTSCHRIFT

(11) **EP 1 875 998 B1**
(45) Veröffentlichungstag und Bekanntmachung des Hinweises auf die Patenterteilung: **12.10.2011**
(21) Anmeldenummer: 07020771.7
(22) Anmeldetag: 08.08.2005
(51) Int. Cl.: B28C 5/42, F16D 3/77, F16H 1/28

(54) **Fahrmischergetriebe, zum Antrieb dessen Trommel**
Truck mixer gear unit for driving its drum
Transmission d'une bétonnière pour l'entrainement de son tambour

(30) Priorität: 07.08.2004 DE 102004038502
(43) Veröffentlichungstag der Anmeldung: 09.01.2008
(62) Teilanmeldung aus: 05776993.7
(73) Patentinhaber: ZF Friedrichshafen AG, 88038 Friedrichshafen (DE)
(72) Erfinder: Heilig, Eduard, 88048 Friedrichshafen (DE)
(74) Vertreter: Gebhard, Wolfgang

(56) Entgegenhaltungen:
- EP-A1- 0 885 702
- DE-A1- 10 033 661
- JP-A- 2002 235 457

## Beschreibung

Die vorliegende Erfindung betrifft ein Getriebe, insbesondere zum Antrieb einer Trommel eines Fahrmischers, nach der im Oberbegriff von Anspruch 1 näher definierten Art.

Getriebe zum Antrieb einer Trommel eines Fahrmischers haben einerseits die Funktion, die Trommel in der Drehrichtung einziehen und in der Drehrichtung entleeren, anzutreiben und andererseits die Gewichtskraft der Trommel und deren Inhalts abzustützen. Hierbei ist es notwendig Relativbewegungen zwischen der Trommel und dem Fahrzeugrahmen des Fahrzeugs über das Getriebe auszugleichen, wobei insbesondere diese Bewegungen bei beladener Trommel und Fahrt des Fahrzeugs in unebenem Gelände auftreten.

Das US-Patent US 6,102,824 und das US-Patent US 3,658,303 offenbaren ein Getriebe zum Antrieb einer Mischtrommel, bei welchem ein Antriebsmotor über eine Planetenstufe einen Abtriebsflansch antreibt, welcher mit der Trommel in Verbindung steht, wobei zwischen einer Abtriebswelle und der Trommel eine sphärische Lagerung mit einer mittigen Bogenzahnkupplung angeordnet ist, welche die Relativbewegungen zwischen der Trommel und dem Fahrzeugrahmen ausgleicht und die Abtriebswelle über Kegelrollenlager drehbar, jedoch ortsfest, im Gehäuse des Mischergetriebes gelagert ist. Diese sphärische Lagerung in Verbindung mit der Bogenzahnkupplung unterliegt der Wartung und benötigt Bauraum zwischen dem Getriebe und der Trommel, welcher jedoch zwischen dem Fahrerhaus des Fahrzeugs und der Trommel nur begrenzt zur Verfügung steht.

Die DE 1 984 542 U offenbart ein Fahrmischergetriebe, bei welchem zwischen dem Abtriebsflansch und der Mischtrommel ein elastisches Element angeordnet ist.

Die DE 31 21 797 A1 offenbart ein Fahrmischergetriebe, welches über eine kardanische Aufhängung mit einem Lagerbock verbunden ist.

Die DE 23 41 250 A1 offenbart ein Fahrmischergetriebe, bei welchem der Abtriebsflansch über ein elastisches Element mit dem Hohlrad verbunden ist.

Die DE 100 33 661 A1 offenbart ein Fahrmischergetriebe gemäß dem Oberbegriff des Anspruchs 1, bei welchem das Getriebegehäuse über eine sphärische Lagerung mit dem Lagerbock verbunden ist.

Die US 2004/0037626 A1 offenbart ein mechanisches Verbindungselement von rotierenden Bauteilen, welches im elastischen Bereich verformbar ist, um den Bauteilen Freiheitsgrade zu ermöglichen.

Der vorliegenden Erfindung liegt die Aufgabe zugrunde, ein Getriebe, insbesondere zum Antrieb einer Trommel eines Fahrmischers zu schaffen, welches insbesondere in seiner Länge kompakt ausgeführt ist.

Die Aufgabe wird mit einem, auch die kennzeichnenden Merkmale des Hauptanspruchs aufweisenden gattungsgemäßen Getriebe gelöst.

Erfindungsgemäß wird der Ausgleich der Relativbewegung zwischen der Trommel und dem Fahrzeugrahmen dadurch gewährleistet, dass mindestens ein Bauteil des Getriebes so ausgebildet ist, dass es durch seine elastische Verformbarkeit diese Relativbewegungen ausführen kann, ohne sich hierbei plastisch zu verformen. Indem hierbei kein zusätzliches Bauteil benötigt wird, sondern ausschließlich durch die Gestaltung der vorhandenen Bauteile die Relativbewegung aufgenommen werden kann, kann das Getriebe, insbesondere in axialer Richtung kompakt ausgeführt werden.

In einer Ausgestaltungsform der Erfindung ist das Gehäuse, insbesondere der Gehäusefuß, des Getriebes und dessen Verstärkungsrippen so ausgebildet, dass der Gehäusefuß die Relativbewegungen zwischen der Trommel und dem Fahrzeugrahmen in seinem elastischen Bereich ausgleichen kann. Vorzugsweise sind diese Ausnehmungen als Schlitze, welche versetzt angeordnet sind, ausgebildet.

Durch die spezielle Ausbildung von Bauteilen des Getriebes, so dass diese Bauteile die Bewegungen zwischen der Trommel und dem Fahrzeugrahmen in ihrem elastischen Bereich ausgleichen können, ist es möglich, ohne zusätzliche Bauteile, alle Funktionen des Getriebes zu erfüllen, wobei das Getriebe, insbesondere in axialer Richtung, kompakt ausgeführt sein kann.

Weitere Merkmale sind der Figurenbeschreibung zu entnehmen.

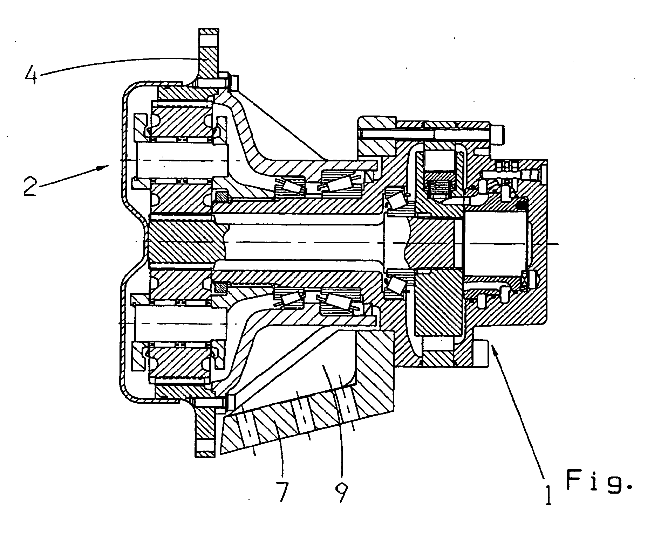

Die einzige Figur zeigt ein Getriebe zum Antrieb einer Mischtrommel mit einem elastisch verformbaren Gehäusefuß.

Ein Antriebsmotor 1 treibt über ein Planetengetriebe 2, dessen äußeres Zentralrad der Abtrieb ist, einen Abtriebsflansch 4 an, welcher mit einer nicht gezeigten Trommel verbunden ist. Der Fuß 7 des Gehäuses 6 ist insbesondere im Bereich seiner Rippen 9 so ausgebildet, dass Bewegungen von der Trommel innerhalb der elastischen Verformbarkeit des Fußes 7 ausgeglichen werden können, wobei der Fuß 7 mit einem nicht gezeigten Lagerbock verbunden ist, welcher mit dem Fahrzeugrahmen verbunden ist.

### Bezugszeichen

- 1: Antriebsmotor
- 2: Planetengetriebe
- 4: Abtriebsflansch
- 7: Fuß
- 9: Rippen

## Patentansprüche

1. Fahrmischergetriebe, zum Antrieb dessen Trommel, bei welchem ein Abtriebsflansch (4) drehfest mit der Trommel des Fahrmischers verbindbar ist und ein Gehäuse des Getriebes ortsfest mit einem Fahrzeugrahmen des Fahrmischers in Verbindung bringbar ist und das Getriebe mindestens ein Bauteil zum Ausgleich von Bewegungen zwischen dem Fahrzeugrahmen und der Trommel aufweist, wobei dieses Bauteil (7) im elastischen Bereich so verformbar ist, dass Bewegungen zwischen der Trommel und dem Fahrzeugrahmen ausgeglichen werden wobei, dass das Getriebegehäuse mindestens einen Befestigungsfuß (7) aufweist, welcher mit dem Fahrzeugrahmen in Verbindung bringbar ist und mit dem Gehäuse verbunden ist oder mit diesem einstückig ausgebildet ist **dadurch gekennzeichnet dass** der Fuß (7) im Bereich seiner Verbindung zum Gehäuse Rippen (9) aufweist und der Fuss (7) und die Rippen (9) schlitzförmige Ausnehmungen aufweisen und sowohl der Fuss (7) als auch die Rippen (9) so ausgebildet sind, dass Relativbewegungen zwischen der Trommel und dem Fahrzeugrahmen ausgeglichen werden können, wobei die Ausnehmungen in dem Fuss (7) und dessen Rippen (9) diese Relativbewegungen ermöglichen.

2. Fahrmischergetriebe nach Anspruch 1, **dadurch gekennzeichnet, dass** die schlitzförmigen Ausnehmungen versetzt angeordnet sind.

## Claims

1. Transport-mixer gear mechanism, for driving its drum, in which gear mechanism an output flange (4) can be connected fixedly to the drum of the transport mixer so as to rotate with it, and a housing of the gear mechanism can be connected in a stationary manner to a vehicle frame of the transport mixer, and the gear mechanism has at least one component for compensating for movements between the vehicle frame and the drum, the said component (7) being deformable in the elastic region in such a way that movements between the drum and the vehicle frame are compensated for, the gear-mechanism housing having at least one fastening foot (7) which can be connected to the vehicle frame and is connected to the housing or is configured in one piece with the latter, **characterized in that** the foot (7) has ribs (9) in the region of its connection to the housing, and the foot (7) and the ribs (9) have slot-shaped recesses, and both the foot (7) and the ribs (9) are configured in such a way that relative movements between the drum and the vehicle frame can be compensated for, the recesses in the foot (7) and its ribs (9) making these relative movements possible.

2. Transport-mixer gear mechanism according to Claim 1, **characterized in that** the slot-shaped recesses are arranged offset.

## Revendications

1. Transmission d'une bétonnière, pour l'entraînement de son tambour, une bride de prise de force (4) pouvant être connectée de manière solidaire en rotation au tambour de la bétonnière et un boîtier de la transmission pouvant être amené en liaison fixement avec un châssis de véhicule de la bétonnière et la transmission présentant au moins un composant pour compenser les mouvements entre le châssis de véhicule et le tambour, ce composant (7) pouvant être déformé dans la région élastique de telle sorte que des mouvements entre le tambour et le châssis de véhicule soient compensés, le boîtier de transmission présentant au moins une base de fixation (7) qui peut être amenée en liaison avec le châssis de véhicule et qui est assemblée au boîtier ou qui est réalisée d'une seule pièce avec celui-ci, **caractérisée en ce que** la base (7) présente, dans la région de son assemblage avec le boîtier, des nervures (9) et la base (7) et les nervures (9) présentent des évidements en forme de fentes et la base (7) ainsi que les nervures (9) étant réalisées de telle sorte que des mouvements relatifs entre le tambour et le châssis de véhicule puissent être compensés, les évidements dans la base (7) et ses nervures (9) permettant ces mouvements relatifs.

2. Transmission d'une bétonnière selon la revendication 1, **caractérisée en ce que** les évidements en forme de fente sont disposés de manière décalée.
